(19) Europäisches Patentamt

European Patent Office

Office européen des brevets

(11) **EP 0 940 435 A1**

(12) **EUROPEAN PATENT APPLICATION**

(43) Date of publication:
08.09.1999 Bulletin 1999/36

(51) Int. Cl.$^6$: **C08L 21/00**, C08J 5/04,
B60C 1/00
// (C08L21/00, 29:04)

(21) Application number: 99301615.3

(22) Date of filing: 03.03.1999

| | |
|---|---|
| (84) Designated Contracting States:<br>AT BE CH CY DE DK ES FI FR GB GR IE IT LI LU<br>MC NL PT SE<br>Designated Extension States:<br>AL LT LV MK RO SI<br><br>(30) Priority: 03.03.1998 JP 5094898<br>03.03.1998 JP 5094998<br>28.12.1998 JP 37258598<br>28.12.1998 JP 37259898<br>28.12.1998 JP 37299698<br>28.12.1998 JP 37301798 | (71) Applicant:<br>Bridgestone Corporation<br>Tokyo (JP)<br><br>(72) Inventors:<br>• Morinaga, Hiroshi<br>Iruma City, Saitama Pref. (JP)<br>• Nakamura, Eiji<br>Kokubunji City, Tokyo (JP)<br><br>(74) Representative: Whalley, Kevin<br>MARKS & CLERK,<br>57-60 Lincoln's Inn Fields<br>London WC2A 3LS (GB) |

(54) **Rubber compositions for tire tread**

(57) A rubber composition for use in a tire tread comprises a matrix rubber including at least one rubber ingredient selected from natural rubber and synthetic diene rubbers and a water-soluble resin having a temperature dissolving in water of not higher than 20°C.

EP 0 940 435 A1

Printed by Xerox (UK) Business Services
2.16.7/3.6

**Description**

BACKGROUND OF THE INVENTION

1. Field of the Invention

This invention relates to a rubber composition for a tire tread, and more particularly to a rubber composition for use in a tread of a pneumatic tire developing excellent steering stabilities on dry road surface and wet road surface inclusive of ice and snow roads and braking performance on wet road surface at an initial use stage of the tire (hereinafter abbreviated as dry steering stability, wet steering stability and wet braking performance) and excellent wet steering stability and wet braking performance at a worn stage of the tire.

2. Description of Related Art

In general, when the pneumatic tire is run on a road surface standing rainwater, friction coefficient between the tire and the road surface largely lowers to lengthen the braking distance, which is related to the occurrence of accident. For this end, it is increasingly demanded in market to particularly improve the braking performance on a rainy road surface.

It is well-known from an old time that drain groove is formed on the tread surface of a tire for removing water from a ground contact region of the tire, and the braking performance on the rainy road surface as the tire largely changes in accordance with the arrangement and volume of the groove. As a result, there are designed many plans on the grooves while considering other performances of the tire. Among them, as the volume of the tread groove is increased, the braking performance on the rainy road surface is improved, but the tread rigidity and the effective ground contact area of the tire are lowered and hence it tends to lower the steering stability on the dry road surface.

As a pneumatic tire having improved performances, JP-A-9-193613, JP-A-9-216970, JP-A-10-237226 and the like disclose tires wherein water-soluble short fibers are compounded into a tread rubber. In these tires, although the effect of improving the braking performance on the specified types of road surface is developed to a certain level, the effect is not always satisfactory, and when the condition of the road surface changes, there is caused a case that the above effect is hardly expected. Further, there is a tendency that the effect of improving the steering stability on the dry road surface is not sufficiently improved or is rather degraded.

In order to improve the steering stability of the tire, the tread portion has hitherto been used in a two-layer structure of cap and base, wherein a relatively soft rubber stock having a high friction coefficient is used as a tread cap rubber and a relatively hard rubber stock for enhancing block rigidity is used as a tread base rubber. Particularly, in pneumatic tires for winter season, a relatively soft rubber stock containing a great amount of oil or a foamed rubber is used as the tread cap rubber. In these tires having such a cap and base structure, however, when the tire is worn by friction with the road surface to expose the tread base rubber on the tire surface, there is caused a problem that the wet steering stability and the wet braking performance and ice braking performance are rapidly degraded due to the properties inherent to the tread base rubber.

In any case, it is strongly desired to more improve not only the braking performance on the snow and ice road surface and the rainy road surface but also the steering stability on dry road surface in view of the running stability of the tire.

SUMMARY OF THE INVENTION

It is, therefore, an object of the invention to provide a rubber composition for a tire tread capable of satisfactorily developing the wet braking performance and the dry steering stability at a higher level required in markets.

It is another object of the invention to provide a rubber composition for a tire tread capable of developing excellent dry and wet steering stabilities and wet braking performance at an initial use stage of the tire and excellent wet steering stability and wet braking performance at a worn stage of the tire.

According to a first aspect of the invention, there is the provision of a rubber composition for a tire tread comprising a matrix rubber including at least one rubber ingredient selected from natural rubber and synthetic diene rubbers and a water-soluble resin having a temperature dissolving in water of not higher than 20°C.

Preferable embodiments of the first aspect of the invention are as follows:

The amount of the water-soluble resin compounded is 1-25 parts by weight based on 100 parts by weight of the rubber ingredient.

The water-soluble resin has a melting point of 120-200°C.

The water-soluble resin is a water-soluble short resin fiber having a length of 1-10 mm and a diameter of 10-100 μm and further a melting point of 120-200°C. The water-soluble short resin fiber is made of a polyvinyl alcohol resin, not less than 95 mol% of which consists of vinyl alcohol unit and vinyl acetate unit provided that the vinyl acetate unit is within a range of 5-30 mol%. In this case, the polyvinyl alcohol resin may contain a thioalcohol unit.

The water-soluble resin and the matrix rubber are adhered to each other in not less than 80% of their boundary face at 100% elongation after vulcanisation.

The rubber composition further contains a silane coupling agent in an amount of 0.5-20 parts by weight based on 100 parts by weight of the rubber ingredient.

The rubber composition further contains a reinforcing filler in an amount of 30-120 parts by weight based on 100 parts by weight of the rubber ingredient. The reinforcing filler is a carbon black or a mixture of carbon black and silica. In the latter case, a ratio of silica content to the total amount of the reinforcing filler is not more than 95% by weight and 5-20% by weight of the silica content is a silane coupling agent. The carbon black has a nitrogen adsorption specific area ($N_2SA$) of 50-150 $m^2/g$. The silica has a nitrogen adsorption specific area ($N_2SA$) of 130-280 $m^2/g$.

The rubber composition further contains a foaming agent in an amount of 1-30 parts by weight based on 100 parts by weight of the rubber ingredient.

According to a second aspect of the invention, there is the provision of a pneumatic tire comprising a radial carcass toroidally extending between a pair of bead cores, a belt superimposed about a crown portion of the carcass and a tread portion superimposed on the belt, wherein a rubber composition for a tire tread defined in the first aspect of the invention is used as a tread rubber constituting the tread portion.

In preferable embodiments of the second aspect of the invention, when the tread portion has a two-layer structure of cap and base, the above rubber composition is used as either a tread base rubber or a tread cap rubber. The water-soluble short fibers included in the rubber composition are oriented in a circumferential direction of the tire.

DESCRIPTION OF PREFERRED EMBODIMENTS

As the rubber ingredient used in the rubber composition according to the invention, use may be made of at least one rubber selected from the group consisting of natural rubber and synthetic diene rubbers. As the synthetic diene rubber, mention may be made of any diene rubbers usually used in the tire such as styrene-butadiene copolymer rubber, polyisoprene rubber, cis-1,4-polybutadiene, ethylene-propylene-diene terpolymer rubber, butyl rubber and the like. These rubbers may be used alone or in a blend thereof.

According to the invention, the water-soluble resin having a temperature dissolving in water of not higher than 20°C is compounded into the matrix rubber. As the water-soluble resin, mention may be made of polyvinyl alcohol, polyacrylic acid, polyacrylamide, polyvinyl pyrolidone, polyethylene oxide, cellulosic resin, polyalkylene and the like. Among them, the use of polyvinyl alcohol is preferable as the water-soluble resin. Particularly, it is important in view of the stability of tire performances that the water-soluble resin is rapidly dissolved in water under an environment of running on any wet road surfaces, particularly a lower temperature road surface in winter season to form voids on the surface of the tire. In order to more develop the high tire performances under such an environment, the water-soluble resin has a temperature dissolving in water of not higher than 20°C, preferably not higher than 10°C, more particularly not higher than 5°C. The term "temperature dissolving in water" used herein means a water temperature when 1 g of the water-soluble resin is placed in 200 cc of water and heated from about 0°C at a temperature rising rate of 2°C/min with stirring till the resin is visually dissolved in water.

The amount of the water-soluble resin compounded is 1-25 parts by weight based on 100 parts by weight of the rubber ingredient. When the amount is less than 1 part by weight, the effect of improving the tire performances by compounding the water-soluble resin is insufficient, while when it exceeds 25 parts by weight, there are caused problems such as poor dispersion in the rubber kneading, poor processability in the rubber extrusion, occurrence of cracks on the surface of the tire tread and the like. The amount of the water-soluble resin compounded is preferably 2-15 parts by weight, more particularly 4-10 parts by weight.

In the invention, the water-soluble resin is more preferable to be a water-soluble short resin fiber having a length of 1-10 mm and a diameter of 10-100 μm or further a melting point of 120-200°C. As the water-soluble short resin fiber, mention may be made of polyvinyl alcohol fiber, cellulosic fiber, polyarginic acid fiber, polyalkylene fiber and the like. Among them, the use of the polyvinyl alcohol fiber is preferable because the fibers other than the polyvinyl alcohol fiber are inferior in the mechanical properties as compared with those of the polyvinyl alcohol fiber.

When the water-soluble short resin fibers are compounded into the matrix rubber as a tread rubber of a pneumatic tire, a greater amount of microscopically groove-shaped voids are formed on the surface of the tread in a high orientation by dissolving the fibers in water or peeling them from the tread surface during the running of the tire. Such microgrooves are considered to efficiently discharge water existing on the road surface into main groove portion (usual drainage pattern portion) in the ground contact region and develop an effect of shortening the braking distance on a road surface of a low friction coefficient indicating a high accident ratio. On the other hand, the softening is caused by the dissolution of the fiber in the vicinity of the tread surface during the running of the tire, but the movement of the tread rubber is suppressed by the restraint of the fiber restrained to the inside of the matrix rubber, whereby the rigidity of the tread is held and the steering stability on dry road surface is improved. Particularly, the responsibility to the handling, action stability in the lane changing and the like are improved.

In case of using the water-soluble short resin fiber, it is generally favorable that the length of the fiber is long from a viewpoint of the improvement of the braking performance, but the indentation of the fibers through a tread pattern formed in a vulcanization mold is apt to be caused as the fiber length becomes longer and also the rubber kneading operation becomes difficult, so that the length of the fiber can not be made too long. In the invention, therefore, the length of the water-soluble short resin fiber is 1-10 mm, preferably 2-5 mm. On the other hand, the diameter of the fiber is favorable to become smaller from a viewpoint of the improvement of the braking performance because the number of grooves formed by dissolution of the fiber on the surface of the tire tread increases to improve the groove dispersibility at the same amount of the fibers compounded as compared with the fibers having a larger diameter. However, as the fiber diameter becomes too small, the fiber breakage is frequently caused in the production of such a fiber and the rubber kneading operation becomes difficult, and even if a fiber is obtained, the resulting microgrooves are crushed under load, so that the fiber diameter can not be made extremely small. In the invention, therefore, the diameter of the water-soluble short resin fiber is 10-100 μm, preferably 15-70 μm. Moreover, the reason why the melting point of the water-soluble short resin fiber is restricted to 120-200°C is the same as previously described in the use of the water-soluble resin. Particularly, when the melting point of the fiber is lower than 120°C, the fiber is melted during the kneading or extrusion process and the shape of the fiber can not be maintained.

The amount of the water-soluble short resin fiber compounded is not particularly restricted, but is 1-25 parts by weight, preferably 2-15 parts by weight, more particularly 4-10 parts by weight based on 100 parts by weight of the rubber ingredient. When the amount is less than 1 part by weight, the effect of improving the tire performances is insufficient, while when it exceeds 25 parts by weight, there are caused problems such as poor dispersion in the rubber kneading, poor processability in the rubber extrusion, occurrence of cracks on the surface of the tire tread and the like.

Among the aforementioned water-soluble short resin fiber, it is particularly preferable that the fiber is made of a polyvinyl alcohol resin (hereinafter abbreviated as PVA resin) consisting of not less than 95 mol% of vinyl alcohol unit and vinyl acetate unit, in which the vinyl acetate unit is within a range of 5-30 mol% considering the tire performances and production stability. When the total amount of vinyl alcohol unit and vinyl acetate unit is less than 95 mol%, the degradation of the spinning stability is caused in the production of the fiber through the conventional wet or dry spinning process to largely decrease the productivity or create uneven fineness, so that the total amount of less than 95 mol% is unfavorable in industry. That is, when the short fibers of the PVA resin having the total amount of less than 95 mol% are used in the rubber composition, the properties of rubber largely change due to the uneven fineness of the fiber and hence the performances of the tire using such a rubber composition change, so that the fineness should strictly be controlled to a certain range. For this end, in the PVA resin used in the invention, the total amount of vinyl alcohol unit and vinyl acetate unit is not less than 95 mol%, preferably not less than 97 mol%, more particularly not less than 99 mol%.

Moreover, a Young's modulus of the PVA resin fiber is not particularly restricted, but the fiber is favorable to have an initial Young's modulus of not less than 20 d/denier considering the shape stability in the rubber kneading. For this purpose, the vinyl acetate unit in the PVA resin is preferably within a range of 5-30 mol%. When the vinyl acetate unit is less than 5 mol%, the water solubility is degraded, while when it exceeds 30 mol%, the fiber production stability is degraded. Preferably, the vinyl acetate unit is within a range of 10-25 mol%.

In the rubber composition according to the invention, it is preferable that the water-soluble resin or water-soluble short resin fiber and the matrix rubber are adhered to each other in not less than 80% of their boundary at 100% elongation after vulcanization. The adhesion at the boundary between the water-soluble resin and the matrix rubber can be judged by cutting a cured rubber containing the resin or short resin fibers oriented in one direction at a thickness of about 1 mm in a direction, when the short resin fibers are contained, perpendicular to a longitudinal direction of the fiber and fixing the cut sample through jigs at a state of applying 100% strain to rubber composition (elongating 2 times) and observing a cut surface by means of a scanning type microscope. When the adhesion area is less than 80%, so-called cat's eye-shaped gap is created in the boundary between the water-soluble resin and the matrix rubber and a given tread rigidity may not be attained. In order to develop a high steering stability in the pneumatic tire according to the invention, when using the matrix rubber having a tensile stress at 100% elongation of 1.5-1.7 MPa as measured according JIS K6251, it is preferable that the boundary to the water-soluble resin is adhered at a rate of not less than 80%, preferably not less than 90%, more particularly not less than 95% without peeling. In this case, a higher tread rigidity can be maintained.

A way for adhering the water-soluble resin or water-soluble short resin fiber to the matrix rubber is not particularly restricted, but there is, for example, a way of melting the resin or fiber during the vulcanization. In this way, the adhesion considered as a melt bonding is formed to the curing matrix rubber.

In order to obtain a good adhesion by melt bonding, the water-soluble resin is favorable to have a melting point of 120-200°C. When the melting point is lower than 120°C, the shape of the water-soluble resin added can not be held as it is in an uncured rubber during usual rubber kneading and extrusion steps. Moreover, the stage of compounding the water-soluble resin into the matrix rubber is not particularly restricted in the rubber kneading, but it is desirable to avoid a stage of melting the water-soluble resin such as an initial mastication stage. On the other hand, the melting point of the water-soluble resin is preferable to be not higher than 200°C for melting the water-soluble resin during the vulcanisation. When it exceeds 200°C, the water-soluble resin hardly melts within an industrial vulcanization temperature range. Even when the melting point is not higher than 200°C, it is required to adjust vulcanization conditions (temperature, pressure, time and the like) for the manufacture of tires actually used so as to melt the water-soluble resin. Therefore, the melting point of the water-soluble resin is preferably not lower than the vulcanization temperature of rubber, particularly 130-180°C, more preferably 130-160°C. Moreover, the melting point of the water-soluble resin is measured as a melting peak temperature by means of a differential scanning calorimeter.

Moreover, when the water-soluble short resin fiber is made of the PVA resin, a stronger adhesion is obtained by various methods such as (1) a method of compounding a silane coupling agent into rubber, (2) a method of pretreating the water-soluble resin with a silane coupling agent, (3) a method of using a PVA resin including a thioalcohol unit (mercaptan unit) and the like. These methods can be used alone or in combination with melt bonding.

As the silane coupling agent, mention may be made of compounds usually used for adhesion of silica particles in a rubber industry such as bis(3-triethoxysilylpropyl) tetrasulfide, 3-trimethoxysilylpropyl benzothiazol tetrasulfide and so on. In this case, the silane coupling agent is compounded in an amount of 0.5-20 parts by weight, preferably 1-10 parts by weight based on 100 parts by weight of the rubber ingredient. When the amount is less than 0.5 part by weight, the sufficient effect of adding the silane coupling agent can not be obtained, while when it exceeds 20 parts by weight, the cost undesirably increases, which is unfavorable in economical reasons.

In the method (3), the good adhesion to rubber can easily be obtained by introducing a sulfur-containing unit such as thioalcohol into polyvinyl alcohol molecule. This can be obtained by, for example, adding lauryl mercaptan or the like as a chain transfer agent in a polymerization stage for polyvinyl alcohol or a polymerization stage of vinyl acetate.

The rubber composition according to the invention further contains carbon black or a mixture of carbon black and silica as a reinforcing filler. In this case, the amount of the reinforcing filler is 40-120 parts by weight, preferably 50-110 parts by weight, more particularly 50-80 parts by weight based on 100 parts by weight of the rubber ingredient.

When the mixture of carbon black and silica is used as the reinforcing filler, the total amount of carbon black and silica is 40-120 parts by weight based on 100 parts by weight of the rubber ingredient. In this case, it is favorable that the ratio of silica content to the total amount of the reinforcing filler is not more than 95% by weight, preferably 20-80% by weight, and 5-20% by weight of the silica content is the silane coupling agent as previously mentioned. When the ratio of silica content is more than 95% by weight, the reinforcing property, particularly wear resistance under a high severity considerably lowers.

Moreover, the carbon black used in the invention is preferable to have a nitrogen adsorption specific surface area ($N_2SA$) of 50-150 $m^2/g$ from a viewpoint of the reinforcing property and processability, while the silica used in the invention is preferable to have a nitrogen adsorption specific surface area ($N_2SA$) of 130-280 $m^2/g$ from a viewpoint of the reinforcing property and processability.

Further, the rubber composition according to the invention properly contains a foaming agent in accordance with the use purpose of the tire. Type of foaming agent is not particularly limited and any of those conventionally used in the rubber industry can be used. As the foaming agent, use may be made of azodicarbonamide (ADCA), dinitrosopentamethylene tetramine (DPT), azobisisobutylonitrile, aromatic sulfonylhydrazide compounds such as benzene sulfonylhydrazide, toluene sulfonylhydiazide, oxybisbenzene sulfonylhydrazide (OBSH), and the like. Among them, azodicarbonamide (ADCA) is favorable in view of production workability. The amount of the foaming agent to be compounded is 1-30 parts by weight, preferably 2-20 parts by weight based on 100 parts by weight. Moreover, if it is intended to promote expansion reaction during the vulcanization, a given amount of an expansion assistant can directly be added to the rubber composition. As the expansion assistant, use may be made of urea, zinc stearate, zinc benzenesulfinate, zinc white and the like.

When the rubber composition containing the foaming agent is vulcanized under certain condition so as to melt the short resin fibers for the formation of the tire tread, bubbles formed by the expansion of the foaming agent gather and come into the water-soluble resin or water-soluble short resin fibers in the cured rubber, so that the apparent volume of the water-soluble resin or fiber occupied in the cured rubber is increased and hence the volume of microgrooves on the tread surface contributing to improve the braking performance on wet road surface can largely be increased without degrading the operability and the like.

In the invention, the expansion ratio of the foaming rubber is not critical but is properly set within a certain range in accordance with the use purpose of the rubber composition. The expansion ratio Vs is represented by the following equation (1):

$$Vs = \{ (\rho 0 - \rho g)/(\rho 1 - \rho g) - 1 \} \times 100 \ (\%) \tag{1}$$

wherein $\rho 1$ is a density ($g/cm^3$) of the foamed rubber, $\rho 0$ is a density ($g/cm^3$) of a solid phase portion in the foamed rub-

ber, and $\rho g$ is a density (g/cm$^3$) of a bubble portion in the foamed rubber. Since the density $\rho g$ of the bubble portion is near to zero and very small to the density $\rho 1$ of the solid phase portion, the equation (1) is approximately equal to the following equation (2):

$$Vs= \{(\rho 0/\rho 1)-1\} \times 100 \ (\%) \qquad\qquad (2)$$

The expansion ratio of the rubber composition according to the invention is not particularly limited and is properly selected in accordance with the use purpose and constituent members considering the tire performances on either dry road or wet road or both. When the rubber composition is used in the tire tread, the expansion ratio is preferable to be within a range of 3-40%. When the tread rubber is made of the rubber composition having an expansion ratio of the above range, as the tire is run on ice road surface of about 0°C at a state of existing a great amount of water thereon, a microscopic drainage effect is more developed by the dissolution or peeling of the water-soluble resin or fiber together with the bubbles formed by the expansion of the foaming agent and excellent running performances on snow and ice road can be obtained. If the expansion ratio is less than 3%, the effect is insufficient. If the expansion ratio exceeds 40%, the performances on ice are sufficiently developed, but the amount of bubbles in the inside of the cured rubber becomes too large to largely lower the breaking limit of the cured rubber and hence degrade the durability of the tread portion, and also the rigidity of the tread is too decreased and there is feared the lowering of the braking performance on the rainy road surface. Particularly, when the steering stability on the dry road surface is important, the expansion ratio in the tread rubber is preferable to be not more than 10% because when the expansion ratio is more than 10%, it is impossible to avoid the lowering of the tread rigidity as compared with the case of using the tread rubber containing no foaming agent and hence it tends to lower the steering stability on dry road surface. Therefore, it is favorable that the expansion ratio in the tread rubber is adjusted so as not to exceed 10% in accordance with the kind of the tire used. On the other hand, when the steering stability on the ice road surface is important, the expansion ratio is preferable to be within a range of 10-40%, more particularly 15-35%.

Moreover, when the rubber composition containing the foaming agent is applied as a base rubber to a base tread of the tread having a cap and base structure, since the higher rigidity of the tread base is required, it is desirable to set the expansion ratio to a lower level as far as possible. In this case, the expansion ratio is favorable to be not more than 6%.

In the rubber composition according to the invention, when the foaming agent is previously added to the water-soluble resin fiber, it is favorable that the amount of the foaming agent added is not more than 150 parts by weight, preferably 30-120 parts by weight based on 100 parts by weight of the resin. When the amount is more than 150 parts by weight, fiber breakage is frequently caused in the formation of the water-soluble resin fiber and the production of such a fiber is very difficult. Particularly, in the production of the water-soluble resin fiber, it is desirable to mix the foaming agent with the water-soluble resin and conduct the fiber formation and hot drawing at a temperature hardly causing the expansion reaction. Although the expansion reaction temperature differs in accordance with the kind of the foaming agent and expansion assistant used and the like, the expansion reaction of the foaming agent is easy to be selectively caused in the fiber during the vulcanization by including a foaming agent having a relatively high expansion temperature into the fiber and compounding an expansion assistant into the matrix rubber without adding to the fiber. Into the rubber composition according to the invention may properly be compounded additives usually used in the rubber industry such as process oil, vulcanizing agent, vulcanization accelerator, antioxidant, zinc oxide, stearic acid, antiozonant and the like.

The rubber composition according to the invention is used for a tread in any pneumatic tire comprising a radial carcass toroidally extending between a pair of bead cores, a belt superimposed about a crown portion of the carcass and a tread portion superimposed on the belt. In this case, the microscopically groove-shaped voids are formed on the surface of the tread by dissolving the water-soluble resin or fibers in water or peeling it from the surface during the running of the tire on wet road surface. Such voids efficiently remove water existing on the rainy road surface or water produced by heat of friction between the tire and ice-snow road surface toward a main groove portion formed in the tread (so-called drainage pattern portion) in the ground contact region of the tread, so that the braking distance can be shortened on a road surface of a low friction coefficient indicating a high accident ratio or on both the rainy road surface and the snow and ice road surface. Although the rigidity of the tread is somewhat lowered by the dissolution or peeling of the water-soluble resin or fibers in the vicinity of the tread surface, the movement of the tread rubber as a whole is controlled by restraint of the matrix rubber containing the fibers therein to improve the steering stability on the dry road surface. Particularly, the responsibility to the handling, behavior stability in the lane change and the like are improved.

In the invention, the orientation of water-soluble resin or fibers can be controlled by orienting it in one direction at the rubber extrusion step, so that when the rubber composition containing the oriented water-soluble resin or fibers is used in the tread rubber of the tire, the braking performance on both the rainy road surface and the snow and ice road surface can considerably be improved. Particularly, when the water-soluble short resin fibers are oriented in the circumferential direction of the tread, the performance of draining water backward in the running direction of the tire at the ground contact region can be more improved.

And also, when the rubber composition containing the foaming agent is used in the tread rubber of the tire, the apparent volume of the microscopic groove is more increased by the dissolution or peeling of the water-soluble resin or fibers and by the expansion of the foaming agent, whereby the performances on both the rainy road surface and the snow and ice road surface can be considerably be improved.

In the pneumatic tire according to the invention, the tread portion is favorable to have a two-layer structure of cap and base, in which a distance from a bottom of a main groove formed in the tread up to an upper end of a tread base rubber (hereinafter referred to as groove height of base rubber) is not less than 20% of a groove depth of the main groove. If the distance is less than 20%, the tread portion is mainly controlled by properties of a tread cap rubber, so that even when the rigidity of the tread base rubber is increased, the sufficient tread rigidity can not be obtained and hence the dry steering stability in an initial running stage and the wet steering stability lowers. However, when the rubber composition according to the invention is used in the tread base rubber having a distance of not less than 20%, the effect of enhancing the rigidity of the tread base rubber is efficiently developed to improve the dry steering stability in an initial running stage and the wet steering stability. And also, when the tread base rubber is exposed due to the wearing of the tread portion during the running of the tire, the water-soluble resin or fibers included in the tread base rubber is dissolved in water or peeled off from the surface of the tread base rubber, whereby the lowering of the braking performance on the wet road surface can be controlled.

The following examples are given in illustration of the invention and are not intended as limitations thereof.

In these examples, properties of water-soluble short resin fibers, properties of rubber compositions and tire performances are measured as follows.

I. Properties of water-soluble short resin fibers

(1) Fiber diameter

20 fibers are randomly extracted and diameters thereof are measured by means of an optical microscope, and an average of these measured values is calculated as a fiber diameter.

(2) Temperature dissolving in water

This is a water temperature when 1 g of the water-soluble resin is placed in 200 cc of water and heated from about 0°C at a temperature rising rate of 2°C/min with stirring till the resin is visually dissolved in water.

II. Properties of rubber compositions

(1) Dynamic storage modulus (E')

A dynamic storage modulus at 30°C of a rubber specimen having a width of 5 mm, a thickness of 2 mm and a length of 20 mm is measured by means of a spectrometer made by Toyo Seiki Co. Ltd. under conditions that an initial load is 150 g, a frequency is 50 Hz and a dynamic strain is 1%. It is represented by an index on the basis that a measured value of a control is 100. The larger the index value, the higher the tread rigidity and it tends to improve the initial dry steering stability and the wet steering stability. However, as the tread rigidity is too high, the ride comfort by feeling may be degraded.

(2) Adhesion ratio at the interface between fiber and matrix rubber

The adhesion at the interface between fiber and matrix rubber is evaluated by cutting out a specimen from a cured rubber containing short fibers oriented in one direction at a thickness of about 1 mm perpendicular to the longitudinal direction of the short fiber, fixing the specimen to jigs at a state of applying 100% strain and observing a cut face by means of a scanning microscope to measure an adhered portion between fiber and rubber and a space portion formed by peeling at the boundary between fiber and rubber. A percentage of the adhered portion is represented as an adhesion ratio.

(3) Short fiber dispersibility

A dispersibility of short fibers in an uncured tread rubber for the manufacture of the tire is evaluated by a standard of the following three stages:

⊚:     level causing no problem

○:     dispersion of fibers is partly poor
         (lump having a diameter of less tan 5 mm)

△:     poor dispersion of fibers at many places
         (lump having a diameter of not less than 5 mm)

III. Tire performances

(1) Steering stability on dry road surface

A vehicle provided with a test tire is actually run on a test course of a dry road surface by two test drivers, during which traction performance, braking performance, handling responsibility and controllability in steering are totally measured to evaluate the steering stability on dry road surface. The result is represented by an index on the basis that the steering stability of a control tire is 100. The larger the index value, the better the performance.

(2) Steering stability on wet road surface

A vehicle provided with a test tire is actually run on a test course of a wet road surface by two test drivers, during which traction performance, braking performance, handling responsibility and controllability in steering are totally measured to evaluate the steering stability on wet road surface. The result is represented by an index on the basis that the steering stability of a control tire is 100. The larger the index value, the better the performance.
Moreover, the initial steering stability is represented by total evaluation of the above steering stabilities on dry road surface and wet road surface.

(3) Wet braking distance

After a test tire is mounted onto a vehicle and trained on a dry road over 100 km and on wet road over 10 km, it is run on a concrete road having a water depth of 2 mm and stopped at a speed of 60 km/hr by braking to measure a distance until the stop of the vehicle. The result is represented by an index on the basis that a reciprocal of the distance in a control tire is 100. The larger the index value, the better the braking performance on rainy road surface.

(4) Braking distance on ice

After a test tire is mounted onto a vehicle and trained on a dry road over 100 km and on a wet road over 10 km, it is run on a smooth ice road and stopped at a speed of 20 km/hr by braking to measure a distance until the stop of the vehicle. The result is represented by an index on the basis that a reciprocal of the distance in a control tire is 100. The larger the index value, the better the braking performance on ice.

(5) Wet steering stability after running

A test tire is mounted onto a vehicle and run over 30000 km. Thereafter, the vehicle is actually run on a test course of a wet road surface by two test drivers, during which traction performance, braking performance, handling responsibility and controllability in steering are totally measured to evaluate the wet steering stability after running. The result is represented by an index on the basis that a control tire is 100. The larger the index value, the better the performance.

(6) Wet braking performance after running

A test tire is mounted onto a vehicle and run over 30000 km. Thereafter, the vehicle is actually run on a test course of a wet road surface and stopped at a speed of 60 km/hr by braking to measure a distance until the stop of the vehicle. The result is represented by an index on the basis that a reciprocal of the distance in a control tire is 100. The larger the index value, the better the wet braking performance after running.

(7) Braking performance on ice after running

A test tire is mounted onto a vehicle and run over 30000 km. There-after, the vehicle is actually run on a test course of an ice surface at an outdoor air temperature of 0~-3°C and stopped at a speed of 20 km/hr by braking to measure a distance until the stop of the vehicle. The result is represented by an index on the basis that a reciprocal of the distance in a control tire is 100. The larger the index value, the better the braking performance on ice after running.

All measurements of the above items (5), (6) and (7) are carried out after it has been confirmed to expose the base rubber after the running of 30,000 km. Moreover, when the test tire is a studless tire containing a foamed rubber, these measurements are carried out after the exposure of the base rubber is confirmed after the running of 15,000 km.

[Preparation of PVA water-soluble fiber]

(1) Sample A

PVA consisting of 70 mol% of vinyl alcohol unit and 30 mol% of vinyl acetate unit and having a polymerization degree of 600 and a saponification degree of 70% is mixed with dimethylsulfoxide (DMSO) and dissolved by heating at 90°C under a reduced nitrogen atmosphere of not more than 100 Torr for 12 hours with stirring to prepare a solution of 40% PVA in DMSO. This solution is extruded through a nozzle having a diameter of 0.2 mm in an extruder set to 90°C and spun and solidified in a mixed solution of acetone/DMSO (weight ratio: 85/15) held at 2°C. Further, this spun fiber is drawn in a mixed solution of acetone/DMSO (weight ratio: 98/2), and after DMSO is removed by extraction in a hot acetone, the fiber is dried in a hot drier of 80°C. The thus obtained water-soluble fiber has a saponification degree of 71%, a melting point of 173°C and a temperature dissolving in water of 3°C and is excellent in a low temperature water solubility.

(2) Sample B

PVA consisting of 92 mol% of vinyl alcohol unit and 8 mol% of vinyl acetate unit and having a polymerization degree of 600 and a saponification degree of 92% and DMSO are mixed in the same manner as described in the sample A. This mixed solution is spun in the same manner as in the sample A except that methanol is used instead of acetone. The thus obtained water-soluble fiber has a saponification degree of 91%, a melting point of 210°C and a temperature dissolving in water of 10°C.

(3) Sample C

In the polymerization of vinyl acetate as a starting material, lauryl mercaptan is added as a chain transfer agent in an amount of 2 parts by weight based on 100 parts by weight of vinyl acetate monomer to prepare a polyvinyl acetate including mercaptan unit in its molecular chain. Then, a modified polyvinyl alcohol (modified PVA) is produced by saponifying the polyvinyl acetate. The same procedure as in the sample A is repeated by using the modified PVA. The thus obtained water-soluble fiber has a saponification degree of 70%, a melting point of 169°C and a temperature dissolving in water of 2°C.

Each of these samples A-C is cut into a given length in the compounding into a rubber ingredient.

[Manufacture of test tire]

A rubber composition having a compounding recipe shown in Table 1 is used as a tread top rubber in Comparative Examples 1-4 and Examples 1-9, and a rubber composition having a compounding recipe shown in Table 2 is used as a tread base rubber in Comparative Example 5 and Examples 10-11, whereby a radial tire for passenger car having a tire size of 205/60R15 is prepared according to a usual manner. The tread portion of this tire has a cap and base structure wherein a height of the tread base rubber is 50% of a height of the total tread rubber. And also, a maximum temperature in the vulcanization is 180°C, while a maximum temperature of the tread portion is 180°C when the temperature of the tread portion during the vulcanization is measured by means of a thermocouple.

Examples 1-9, Comparative Examples 1-4

With respect to the rubber composition and the test tire in each example, adhesion ratio between fiber and rubber, short fiber dispersibility, braking distance on ice (braking performance on snow and ice road surface), wet braking distance (braking performance on rainy road surface) and steering stability on dry road are evaluated by the aforementioned methods to obtain results as shown in Table 1.

Table 1-1

| Compounding recipe of tread top rubber (part by weight) | | Comparative Example 1 | Example 1 | Example 2 | Example 3 |
|---|---|---|---|---|---|
| Styrene-butadiene rubber *1 | | 60 | 60 | 60 | 60 |
| Styrene-butadiene rubber *2 | | 55 | 55 | 55 | 55 |
| Aromatic oil | | 20 | 20 | 20 | 20 |
| Carbon black *3 | | 65 | 65 | 65 | 65 |
| Silane coupling agent *4 | | - | - | - | - |
| Wax | | 2 | 2 | 2 | 2 |
| Stearic acid | | 1 | 1 | 1 | 1 |
| Antioxidant TMDQ *5 | | 0.5 | 0.5 | 0.5 | 0.5 |
| Antioxidant IPPD *6 | | 1 | 1 | 1 | 1 |
| ZnO | | 3 | 3 | 3 | 3 |
| Vulcanization accelerator MBTS *7 | | 0.5 | 0.5 | 0.5 | 0.5 |
| Vulcanization accelerator DPG *8 | | 0.5 | 0.5 | 0.5 | 0.5 |
| Vulcanization accelerator TBBS *9 | | 0.5 | 0.5 | 0.5 | 0.5 |
| Sulfur | | 1.8 | 1.8 | 1.8 | 1.8 |
| PVA short fiber *10 (Sample No.) | | - | 3 (B) | 1.5/1.5 (B/A) | 1.0/2.0 (B/A) |
| Properties of PVA short fiber | melting point (°C) | - | 210 | 210/173 | 210/173 |
| | diameter (µm) | - | 25 | 25 | 25 |
| | length (mm) | - | 2 | 2 | 2 |
| Adhesion ratio between fiber and rubber (%) | | - | 0 | 47 | 62 |
| Short fiber dispersibility | | - | ◎ | ◎ | ◎ |
| Braking distance on ice | | 100 | 102 | 103 | 103 |
| Wet braking distance | | 100 | 101 | 101 | 102 |
| Steering stability on dry road | | 100 | 101 | 101 | 102 |

Note)
*1: #1500, trade name, made by JSR Corporation
*2: #0120, trade name, made by JSR Corporation (37.5% oil-extended)
*3: Seast 7H, trade name, made by Tokai Carbon Co., Ltd.
*4: bis(3-triethoxysilylpropyl) tetrasulfide
*5: polymerized 2,2,4-trimethyl-1,2-dihydroquinoline
*6: N-isopropyl-N'-phenyl-phenylenediamine
*7: bis-benzothiazolyl-2-disulfide
*8: diphenyl guanidine
*9: N-t-butyl-2-benzothiazolyl sulfensmide
*10: trial product

Table 1-2

| Compounding recipe of tread top rubber part by weight | | Example 4 | Example 5 | Example 6 | Example 7 |
|---|---|---|---|---|---|
| Styrene-butadiene rubber *1 | | 60 | 60 | 60 | 60 |
| Styrene-butadiene rubber *2 | | 55 | 55 | 55 | 55 |
| Aromatic oil | | 20 | 20 | 20 | 20 |
| Carbon black *3 | | 65 | 65 | 65 | 65 |
| Silane coupling agent *4 | | - | - | - | - |
| Wax | | 2 | 2 | 2 | 2 |
| Stearic acid | | 1 | 1 | 1 | 1 |
| Antioxidant TMDQ *5 | | 0.5 | 0.5 | 0.5 | 0.5 |
| Antioxidant IPPD *6 | | 1 | 1 | 1 | 1 |
| ZnO | | 3 | 3 | 3 | 3 |
| Vulcanization accelerator MBTS *7 | | 0.5 | 0.5 | 0.5 | 0.5 |
| Vulcanization accelerator DPG *8 | | 0.5 | 0.5 | 0.5 | 0.5 |
| Vulcanization accelerator TBBS *9 | | 0.5 | 0.5 | 0.5 | 0.5 |
| Sulfur | | 1.8 | 1.8 | 1.8 | 1.8 |
| PVA short fiber *10 (Sample No.) | | 3 (A) | 6 (A) | 10 (A) | 20 (A) |
| Properties of PVA short fiber | melting point (°C) | 173 | 173 | 173 | 173 |
| | diameter (μm) | 25 | 25 | 25 | 25 |
| | length (mm) | 2 | 2 | 2 | 2 |
| Adhesion ratio between fiber and rubber (%) | | 95 | 94 | 97 | 96 |
| Short fiber dispersibility | | ◎ | ◎ | ○ | △ |
| Braking distance on ice | | 104 | 110 | 112 | 106 |
| Wet braking distance | | 103 | 108 | 110 | 108 |
| Steering stability on dry road | | 104 | 107 | 110 | 105 |

Note)
*1: #1500, trade name, made by JSR Corporation
*2: #0120, trade name, made by JSR Corporation (37.5% oil-extended)
*3: Seast 7H, trade name, made by Tokai Carbon Co., Ltd.
*4: bis(3-triethoxysilylpropyl) tetrasulfide
*5: polymerized 2,2,4-trimethyl-1,2-dihydroquinoline
*6: N-isopropyl-N'-phenyl-phenylenediamine
*7: bis-benzothiazolyl-2-disulfide
*8: diphenyl guanidine
*9: N-t-butyl-2-benzothiazolyl sulfensmide
*10: trial product

Table 1-3

| Compounding recipe of tread top rubber (part by weight) | | Example 8 | Example 9 | Example 10 | Example 11 | Example 12 |
|---|---|---|---|---|---|---|
| Styrene-butadiene rubber *1 | | 60 | 60 | 60 | 60 | 60 |
| Styrene-butadiene rubber *2 | | 55 | 55 | 55 | 55 | 55 |
| Aromatic oil | | 20 | 20 | 20 | 20 | 10 |
| Carbon black *3 | | 65 | 65 | 65 | 65 | 65 |
| Silane coupling agent *4 | | 3 | 5 | - | - | - |
| Wax | | 2 | 2 | 2 | 2 | 2 |
| Stearic acid | | 1 | 1 | 1 | 1 | 1 |
| Antioxidant TMDQ *5 | | 0.5 | 0.5 | 0.5 | 0.5 | 0.5 |
| Antioxidant IPPD *6 | | 1 | 1 | 1 | 1 | 1 |
| ZnO | | 3 | 3 | 3 | 3 | 3 |
| Vulcanization accelerator MBTS *7 | | 0.5 | 0.5 | 0.5 | 0.5 | 0.5 |
| Vulcanization accelerator DPG *8 | | 0.5 | 0.5 | 0.5 | 0.5 | 0.5 |
| Vulcanization accelerator TBBS *9 | | 0.5 | 0.5 | 0.5 | 0.5 | 0.5 |
| Sulfur | | 1.8 | 1.8 | 1.8 | 1.8 | 1.8 |
| PVA short fiber *10 (Sample No.) | | 6 (A) | 6 (B) | 6 (C) | 6 (A) | 6 (A) |
| Properties of PVA short fiber | melting point (°C) | 173 | 210 | 169 | 173 | 173 |
| | diameter (μm) | 25 | 25 | 25 | 25 | 25 |
| | length (mm) | 2 | 2 | 2 | 5 | 10 |
| Adhesion ratio between fiber and rubber (%) | | 100 | 95 | 100 | 95 | 94 |
| Short fiber dispersibility | | ◎ | ◎ | ◎ | ○ | △ |
| Braking distance on ice | | 109 | 112 | 109 | 114 | 107 |
| Wet braking distance | | 109 | 107 | 108 | 110 | 107 |
| Steering stability on dry road | | 110 | 109 | 110 | 113 | 109 |

Note)
*1: #1500, trade name, made by JSR Corporation
*2: #0120, trade name, made by JSR Corporation (37.5% oil-extended)
*3: Seast 7H, trade name, made by Tokai Carbon Co., Ltd.
*4: bis(3-triethoxysilylpropyl) tetrasulfide
*5: polymerized 2,2,4-trimethyl-1,2-dihydroquinoline
*6: N-isopropyl-N'-phenyl-phenylenediamine
*7: bis-benzothiazolyl-2-disulfide
*8: diphenyl guanidine
*9: N-t-butyl-2-benzothiazolyl sulfensmide
*10: trial product

In Table 1, Comparative Example 1 is a control tire and uses a usual carbon-reinforced rubber composition containing no PVA short fibers as a tread top rubber. In Example 1, the water-soluble short fibers having a high melting point are added to the rubber composition of Comparative Example 1 wherein the adhesion ratio between fiber and rubber is 0%, so that the braking performance on ice is improved but the increase of the tread rigidity is less and the wet braking performance and the steering stability on dry road are only slightly improved as compared with those of Comparative Example 1.

In Examples 2 and 3, a part of the water-soluble short fibers in Example 1 is replaced with the water-soluble short fibers having a low melting point. In this case, the tread rigidity is somewhat increased by adhering the fibers to rubber to a certain level and the wet braking performance and the steering stability on dry road are improved as compared with those of Comparative Example 1, but the adhesion ratio between fiber and rubber is still low, so that the improving effect is small.

In Example 4, all of the water-soluble short fibers in Example 1 is replaced with the water-soluble short fibers having a low melting point. In this case, the adhesion ratio between fiber and rubber is high, so that the wet braking performance and the steering stability on dry road are considerably excellent.

In Examples 5-7, the amount of the water-soluble short fibers compounded is made larger than that of Example 4. As the amount of the water-soluble short fibers is increased to about 10 parts by weight, the tire performances are largely improved, but When the amount is increased to 20 parts by weight, the short fiber dispersibility is poor and the hardness as a tread top rubber is too high and hence the sticky feeling of the gripping force tends to lower.

Example 8 is a case of adding a silane coupling agent to the rubber composition of Example 5. In this case, the adhesion between fiber and rubber is more improved to more improve the steering stability on dry road.

Example 9 is a case of replacing the short fiber in Example 5 with the water-soluble short fibers having a high melting point and adding a silane coupling agent to the rubber composition of Example 5. In this case, even if the short fibers are not melted during the vulcanization, the strong adhesion is developed by the silane coupling agent and hence the tire performances are improved.

Example 10 is a case of using the modified PVA short fibers including the thioalcohol unit instead of the short fiber of Example 5. The adhesion between fiber and rubber is more improved to further improve the steering stability on dry road.

Examples 11 and 12 are cases of varying the length of the short fiber used. The longer the length of the short fiber, the better the tire performances likewise the case of increasing the amount of the short fiber compounded. However, when the length of the short fiber exceeds 10 mm, there is a tendency of raising problems in the dispersibility of the short fiber and processability of rubber extrusion.

Examples 13-14, Comparative Example 2

The adhesion ratio between fiber and rubber, short fiber dispersibility, braking distance on ice after running, wet braking distance after running and steering stability on dry road are evaluated to obtain results as shown in Table 2.

Table 2

| Compounding recipe of tread base rubber (part by weight) | | Comparative Example 2 | Example 13 | Example 14 |
|---|---|---|---|---|
| Natural rubber | | 60 | 60 | 60 |
| Styrene-butadiene rubber *1 | | 40 | 40 | 40 |
| Carbon black *2 | | 80 | 80 | 80 |
| Silane coupling agent *3 | | - | - | 3 |
| Aromatic oil | | 10 | 10 | 10 |
| Stearic acid | | 1 | 1 | 1 |
| ZnO | | 2.5 | 2.5 | 2.5 |
| Antioxidant *4 | | 1 | 1 | 1 |
| Wax | | 0.2 | 0.2 | 0.2 |
| Vulcanization accelerator DPG *5 | | 0.3 | 0.3 | 0.3 |
| Vulcanization accelerator DN *6 | | 0.3 | 0.3 | 0.3 |
| Vulcanization accelerator NS *7 | | 0.5 | 0.5 | 0.5 |
| Sulfur | | 1.5 | 1.5 | 1.5 |
| PVA short fiber *8 (Sample No.) | | -- | 5 (A) | 5 (A) |
| Properties of PVA short fiber | melting point (°C) | - | 173 | 173 |
| | diameter (μm) | - | 25 | 25 |
| | length (mm) | - | 3 | 3 |
| Adhesion ratio between fiber and rubber (%) | | - | 95 | 100 |
| Short fiber dispersibility | | - | ◎ | ◎ |
| Steering stability on dry road | | 100 | 105 | 107 |
| Braking distance on ice after running | | 100 | 114 | 113 |
| Wet braking distance after running | | 100 | 109 | 110 |

Note)
*1: #1500, trade name, made by JSR Corporation
*2: Carbon N220, trade name, made by Asahi Carbon Co., Ltd.
*3: bis(3-triethoxysilylpropyl) tetrasulfide
*4: Nocrac 6C, trade name, made by Ohuchi Shinko Kagaku Co., Ltd.
*5: diphenyl guanidine
*6: dibenzothiazyl disulfide
*7: N-t-butyl-2-benzothiazyl sulfenamide
*8: Trial product

As seen from Table 2, even when the rubber composition according to the invention is used as a tread base rubber in the tire, the steering stability on dry road is improved. Furthermore, the braking performance on ice and the wet braking performance are considerably improved as compared with those of the tire in Comparative Example 2 even when the tread base rubber is exposed by the wearing of the tread rubber during the running of the tire.

[Preparation of PVA water-soluble short fiber]

(1) Sample A

A polymer consisting of 81 mol% of vinyl alcohol unit and 19 mol% of vinyl acetate unit and having a polymerization degree of 750 and a saponification degree of 81% is mixed with dimethyl sulfoxide (DMSO) and melted by heating at 90°C in a reduced nitrogen atmosphere of not more than 100 Torr for 12 hours with stirring to prepare a solution of 40% polyvinyl alcohol polymer in DMSO. This solution is extruded through a nozzle of 0.2 mm in diameter in an extruder set to 90°C and spun and solidified in a bath of a mixed solution of acetone/DMSO (weight ratio: 85/15) held at 2°C. The thus spun fiber is drawn in a mixed solution of acetone/DMSO (weight ratio: 98/2) and dried in a hot dryer of 80°C after DMSO is removed by extraction in hot acetone. The thus obtained fiber has a saponification degree of 80%, a temperature dissolving in water of 3°C and a melting point of 191°C. This fiber is cut into a given length by means of a cutter to obtain short fibers.

(2) Samples B and C

The same procedure as in the sample A is repeated except that the diameter of the nozzle is changed in the spinning of the mixed solution to obtain samples B and C having a desired fiber diameter, respectively.

[Manufacture of test tire]

A rubber composition having a compounding recipe as shown in Tables 3-4 is used as a tread top rubber in Comparative Examples 6-9 and Examples 12-24 to manufacture a tire comprising a tread portion of a cap and base structure wherein a height of the tread base rubber is 50% of a height of the total tread rubber. And also, a maximum temperature in the vulcanization is 180°C, while a maximum temperature of the tread portion is 180°C when the temperature of the tread portion during the vulcanization is measured by means of a thermocouple.

Moreover, tires of Examples 15-24 and Comparative Examples 3-4 are radial tires for passenger car having a tire size of 205/60R15 wherein the tread is made of non-foamed rubber, while the tires of Examples 25-27 and Comparative Examples 5-6 are studless tires for passenger car having a tire size of 185/70R13 wherein the tread top rubber is a foamed rubber.

Examples 15-24, Comparative Examples 3-4

With respect to the rubber composition and tire in each of these examples, the short fiber dispersibility, expansion ratio in cured rubber, wet braking distance (wet braking performance), braking distance on ice (braking performance on ice) and steering stability on dry road are evaluated by the aforementioned methods to obtain results as shown in Table 3.

Table 3-1

| Compounding recipe (part by weight) | | Comparative Example 3 | Example 15 | Example 16 | Example 17 | Example 18 | Example 19 |
|---|---|---|---|---|---|---|---|
| Styrene-butadiene rubber *1 | | 60 | 60 | 60 | 60 | 60 | 60 |
| Styrene-butadiene rubber *2 | | 55 | 55 | 55 | 55 | 55 | 55 |
| Aromatic oil | | 20 | 20 | 20 | 20 | 20 | 20 |
| Carbon black *3 | | 65 | 65 | 65 | 65 | 65 | 65 |
| Silica *4 | | - | - | - | - | - | - |
| Silane coupling agent *5 | | - | - | 2 | 5 | 10 | 5 |
| Wax | | 2 | 2 | 2 | 2 | 2 | 2 |
| Stearic acid | | 1 | 1 | 1 | 1 | 1 | 1 |
| Antioxidant TMDQ *6 | | 0.5 | 0.5 | 0.5 | 0.5 | 0.5 | 0.5 |
| Antioxidant IPPD *7 | | 1 | 1 | 1 | 1 | 1 | 1 |
| ZnO | | 3 | 3 | 3 | 3 | 3 | 3 |
| Vulcanization accelerator MBTS *8 | | 0.5 | 0.5 | 0.5 | 0.5 | 0.5 | 0.5 |
| Vulcanization accelerator DPG *9 | | 0.5 | 0.5 | 0.5 | 0.5 | 0.5 | 0.5 |
| Vulcanization accelerator TBBS *10 | | 0.5 | 0.5 | 0.5 | 0.5 | 0.5 | 0.5 |
| Sulfur | | 1.8 | 1.8 | 1.8 | 1.8 | 1.8 | 1.8 |
| PVA short fiber *11 (Sample No.) | | - | 3 (A) | 3 (A) | 3 (A) | 3 (A) | 6 (A) |
| Properties of PVA short fiber | diameter (μm) | - | 25 | 25 | 25 | 25 | 25 |
| | length (mm) | - | 2 | 2 | 2 | 2 | 2 |
| Short fiber dispersibility | | - | ◎ | ◎ | ◎ | ◎ | ◎ |
| Wet braking distance | | 100 | 101 | 103 | 104 | 104 | 107 |
| Braking distance on ice | | 100 | 104 | 104 | 105 | 103 | 110 |
| Steering stability on dry road | | 100 | 101 | 103 | 104 | 104 | 108 |

Note)
*1: #1500, trade name, made by JSR Corporation
*2: #0120, trade name, made by JSR Corporation (37.5% oil-extended)
*3: Seast 7H, trade name, made by Tokai Carbon Co., Ltd.
*4: Nipsil AQ, trade name, made by Nippon Silica Kogyo Co., Ltd.
5* bis(3-triethoxysilylpropyl) tetrasulfide
*6: polymerized 2,2,4-trimethyl-1,2-dihydroquinoline
*7: N-isopropyl-N'-phenyl-p-phenylenediamine
*8: bis-benzothiazolyl-2-disulfide
*9: diphenyl guanidine
*10: N-t-butyl-2-benzothiazolyl sulfensmide
*11: trial product

Table 3-2

| Compounding recipe (part by weight) | | Example 20 | Example 21 | Example 22 | Example 23 | Comparative Example 4 | Example 24 |
|---|---|---|---|---|---|---|---|
| Styrene-butadiene rubber *1 | | 60 | 60 | 60 | 60 | 60 | 60 |
| Styrene-butadiene rubber *2 | | 55 | 55 | 55 | 55 | 55 | 55 |
| Aromatic oil | | 20 | 20 | 20 | 20 | 10 | 10 |
| Carbon black *3 | | 65 | 65 | 65 | 65 | 25 | 25 |
| Silica *4 | | - | - | - | - | 55 | 55 |
| Silane coupling agent *5 | | 5 | 5 | 5 | 5 | 5.5 | 5.5 |
| Wax | | 2 | 2 | 2 | 2 | 2 | 2 |
| Stearic acid | | 1 | 1 | 1 | 1 | 1 | 1 |
| Antioxidant TMDQ *6 | | 0.5 | 0.5 | 0.5 | 0.5 | 0.5 | 0.5 |
| Antioxidant IPPD *7 | | 1 | 1 | 1 | 1 | 1 | 1 |
| ZnO | | 3 | 3 | 3 | 3 | 3 | 3 |
| Vulcanization accelerator MBTS *8 | | 0.5 | 0.5 | 0.5 | 0.5 | 0.5 | 0.5 |
| Vulcanization accelerator DPG *9 | | 0.5 | 0.5 | 0.5 | 0.5 | 0.5 | 0.5 |
| Vulcanization accelerator TBBS *10 | | 0.5 | 0.5 | 0.5 | 0.5 | 0.5 | 0.5 |
| Sulfur | | 1.8 | 1.8 | 1.8 | 1.8 | 1.8 | 1.8 |
| PVA short fiber *11 (Sample No.) | | 10 (A) | 20 (A) | 6 (A) | 6 (A) | -- | 6 (A) |
| Properties of PVA short fiber | diameter (μm) | 25 | 25 | 25 | 25 | - | 25 |
| | length (mm) | 2 | 2 | 5 | 10 | - | 2 |
| Short fiber dispersibility | | ○ | △ | ◎ | △ | - | ◎ |
| Wet braking distance | | 109 | 108 | 110 | 106 | 100 | 110 |
| Braking distance on ice | | 113 | 108 | 114 | 108 | 100 | 109 |
| Steering stability on dry road | | 113 | 106 | 113 | 109 | 100 | 109 |

Note)
*1: #1500, trade name, made by JSR Corporation
*2: #0120, trade name, made by JSR Corporation (37.5% oil-extended)
*3: Seast 7H, trade name, made by Tokai Carbon Co., Ltd.
*4: Nipsil AQ, trade name, made by Nippon Silica Kogyo Co., Ltd.
*5: bis(3-triethoxysilylpropyl) tetrasulfide
*6: polymerized 2,2,4-trimethyl-1,2-dihydroquinoline
*7: N-isopropyl-N'-phenyl-p-phenylenediamine
*8: bis-benzothiazolyl-2-disulfide
*9: diphenyl guanidine
*10: N-t-butyl-2-benzothiazolyl sulfensmide
*11: trial product

Comparative Example 3 is a control tire using a carbon reinforced rubber composition containing no PVA short fiber as a tread top rubber.
In Example 15, the water-soluble short fibers are added to the rubber composition of Comparative Example 3. In this case, the wet braking performance and the steering stability on dry road are somewhat improved as compared with those of Comparative Example 3, while the braking performance on ice is largely improved.
Examples 16-18 are cases of varying the amount of silane coupling agent added to the rubber composition of Example 15, respectively. In this case, the adhesion between fiber and rubber is developed to increase the tread rigidity and the wet braking performance and the steering stability on dry road are considerably improved.

Examples 19-21 are cases of varying the amount of the PVA short fiber in the rubber composition of Example 17, respectively. In Examples 19 and 20, each of the performances is largely improved as compared with that of Example 17. However, as the amount exceeds 10 parts by weight, the short fiber dispersibility somewhat lowers, from which it is apparent that the amount of the short fiber compounded is preferably 4-10 parts by weight.

Examples 22 and 23 are cases of changing the length of the short fiber, respectively. The increase of the short fiber length indicates the same tendency as the increase of the amount of the short fiber compounded, but when the length exceeds 10 mm, there is caused a problem in the short fiber dispersibility or the like, so that the length is preferably 1-10 mm.

In Comparative Example 4 and Example 24, silica is together with carbon black in the rubber composition. When Example 24 is compared with Comparative Example 4 using no PVA water-soluble short fiber, the performances are considerably improved by the development of the adhesion between fiber and rubber and particularly the improvement of the wet braking performance is remarkable.

Examples 25-27, Comparative Examples 5-6

With respect to the rubber composition and tire in each of these examples, the expansion ratio in the tread top rubber, short fiber dispersibility, wet braking distance (wet braking performance), braking distance on ice (braking performance on ice) and steering stability on dry road are evaluated by the aforementioned methods to obtain results as shown in Table 4.

Table 4

| Compounding recipe (part by weight) | | Comparative Example 5 | Comparative Example 6 | Example 25 | Example 26 | Example 27 |
|---|---|---|---|---|---|---|
| Natural rubber | | 40 | 40 | 40 | 40 | 40 |
| Butadiene rubber *1 | | 60 | 60 | 60 | 60 | 60 |
| Carbon black *2 | | 50 | 50 | 50 | 50 | 50 |
| Silane coupling agent *3 | | - | 5 | 5 | 5 | 5 |
| Aromatic oil | | 5 | 5 | 5 | 5 | 5 |
| Stearic acid | | 1.5 | 1.5 | 1.5 | 1.5 | 1.5 |
| ZnO | | 3 | 3 | 3 | 3 | 3 |
| Antioxidant *4 | | 0.8 | 0.8 | 0.8 | 0.8 | 0.8 |
| Vulcanization accelerator *5 | | 0.6 | 0.6 | 0.6 | 0.6 | 0.6 |
| Vulcanization accelerator *6 | | 1 | 1 | 1 | 1 | 1 |
| Sulfur | | 1.1 | 1.1 | 1.1 | 1.1 | 1.1 |
| Foaming agent *7 | | 3 | 3 | 3 | 3 | 3 |
| Expansion assistant *8 | | 1.5 | 1.5 | 1.5 | 1.5 | 1.5 |
| Expansion assistant *9 | | 1.5 | 1.5 | 1.5 | 1.5 | 1.5 |
| PVA short fiber *10 (Sample No.) | | - | - | 6 (A) | 6 (B) | 6 (C) |
| Properties of PVA short fiber | diameter ($\mu$m) | - | - | 25 | 40 | 80 |
| | length (mm) | - | - | 2 | 2 | 2 |
| Expansion ratio in tread top rubber (%) | | 23 | 22 | 23 | 24 | 23 |
| Short fiber dispersibility | | - | - | ◎ | ◎ | ◎ |
| Wet braking distance | | 100 | 100 | 104 | 103 | 103 |
| Braking distance on ice | | 100 | 98 | 110 | 109 | 107 |
| Steering stability on dry road | | 100 | 101 | 113 | 109 | 104 |

Note)
* 1: cis-1,4-polybutadiene (BR01, trade name, made by JSR Corporation)
*2: Carbon N220, trade name, made by Asahi Carbon Co., Ltd.
*3: bis(3-triethoxysilylpropyl) tetrasulfide
*4: Nocrac 6C, trade name, made by Ohuchi Shinko Kagaklu Kogyo Co., Ltd.
*5: dibenzothiazyl disulfide
*6: N-cyclohexyl-2-benzothiazyl sulfenamide
*7: azodicarbonamide
*8: Zinc benzenesulfinate, made by Ohtsuka Kagaku Co., Ltd.
*9: blend of urea/zinc stearate (85/15), made by Ohtsuka Kagaku Co., Ltd.
*10: trial product

When a foamed rubber made from the rubber composition according to the invention is used as the tread top rubber, the tire performances are considerably improved as seen from Example 25. Particularly, it has been found that the improvement of the steering stability on dry road by the compounding of the water-soluble short fibers is large when the tire performances are evaluated in the studless tire having a lower block rigidity due to the arrangement of sipes in the tread.

In Examples 26 and 27, the diameter of the short fiber is varied. As the diameter of the short fiber becomes too large, the steering stability on dry road somewhat lowers. Moreover, when the diameter exceeds 50 $\mu$m, it tends to tie a long time required for removing the solvent in the production of the fiber.

[Preparation of PVA water-soluble short fiber]

(1) Sample A

PVA consisting of 75 mol% of vinyl alcohol unit and 25 mol% of vinyl acetate unit and having a polymerization degree of 500 and a saponification degree of 75% is mixed with dimethylsulfoxide (DMSO) and dissolved by heating at 90°C under a reduced nitrogen atmosphere of not more than 100 Torr for 12 hours with stirring to prepare a solution of 45% PVA in DMSO. This solution is extruded through a nozzle having a given diameter in an extruder set to 90°C and spun and solidified in a mixed solution of acetone/DMSO (weight ratio: 85/15) held at 2°C. Further, this spun fiber is drawn 4-5 times in a mixed solution of acetone/DMSO (weight ratio: 98/2), and after DMSO is removed by extraction in a hot acetone, the fiber is dried in a hot drier of 80°C. The thus obtained water-soluble fiber has a melting point of 169°C and a temperature dissolving in water of 2°C. The water-soluble fiber is cut into a given length by means of a cutter.

(2) Sample B

The same procedure as in the sample A is repeated by using PVA consisting of 81 mol% of vinyl alcohol unit and 19 mol% of vinyl acetate unit and having a polymerization degree of 750 and a saponiflcation degree of 80%. The thus obtained fiber has a melting point of 191°C and a temperature dissolving in water of 3°C.

(3) Sample C

The same procedure as in the sample A is repeated by using PVA consisting of 88 mol% of vinyl alcohol unit and 12 mol% of vinyl acetate unit and having a polymerization degree of 700 and a saponification degree of 88%. The thus obtained fiber has a melting point of 196°C and a temperature dissolving in water of 8°C.

(4) Sample D

The same procedure as in the sample A is repeated by using PVA consisting of 91 mol% of vinyl alcohol unit and 9 mol% of vinyl acetate unit and having a polymerization degree of 700 and a saponification degree of 92%. The thus obtained fiber has a melting point of 211°C and a temperature dissolving in water of 14°C.

(5) Sample E

The same procedure as in the sample A is repeated by using PVA consisting of 95 mol% of vinyl alcohol unit and 5 mol% of vinyl acetate unit and having a polymerization degree of 800 and a saponification degree of 96%. The thus obtained fiber has a melting point of 214°C and a temperature dissolving in water of 29°C.

Each of the above samples A-E is used to prepare a rubber composition having a compounding recipe as shown in Tables 5 and 6.

## Table 5

| Rubber composition No. (part by weight) | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Styrene-butadiene rubber *1 | | 50 | 50 | 50 | 50 | 50 | 50 | 70 | 70 | 70 | 70 | 25 | 50 | 50 | 50 | 50 |
| Natural rubber | | 50 | 50 | 50 | 50 | 50 | 50 | 30 | 30 | 30 | 30 | 75 | 50 | 50 | 50 | 50 |
| Total amount of reinforcing filler | | 80 | 80 | 80 | 80 | 80 | 80 | 90 | 90 | 110 | 110 | 80 | 80 | 80 | 80 | 80 |
| Carbon black N234 *2 | | 40 | 40 | 40 | 40 | 40 | 40 | 45 | 45 | 80 | 0 | 40 | 40 | 40 | 40 | 40 |
| Carbon black N110 *3 | | 0 | 0 | 0 | 0 | 0 | 0 | 0 | 0 | 0 | 80 | 0 | 0 | 0 | 0 | 0 |
| Silica *4 | | 40 | 40 | 40 | 40 | 40 | 40 | 45 | 45 | 30 | 30 | 40 | 40 | 40 | 40 | 40 |
| Silane coupling agent *5 | | 4 | 4 | 4 | 4 | 4 | 4 | 4.5 | 4.5 | 3 | 3 | 4 | 4 | 4 | 4 | 4 |
| Softening agent | | 10 | 10 | 10 | 10 | 10 | 10 | 15 | 15 | 15 | 15 | 10 | 10 | 10 | 10 | 10 |
| Stearic acid | | 1 | 1 | 1 | 1 | 1 | 1 | 1 | 1 | 1 | 1 | 1 | 1 | 1 | 1 | 1 |
| Antioxidant | | 1 | 1 | 1 | 1 | 1 | 1 | 1 | 1 | 1 | 1 | 1 | 1 | 1 | 1 | 1 |
| Wax | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| ZnO | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| DPG *6 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| DM *7 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| NS *8 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Sulfur | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| PVA short fiber *9 | sample No. | - | A | A | A | A | A | A | A | A | A | A | B | C | D | E |
| | amount | 0 | 5 | 25 | 5 | 5 | 5 | 10 | 10 | 10 | 10 | 5 | 5 | 5 | 5 | 5 |
| | length (mm) | - | 2 | 2 | 15 | 2 | 2 | 2 | 5 | 5 | 5 | 2 | 2 | 2 | 2 | 2 |
| | diameter (mm) | - | 0.02 | 0.02 | 0.02 | 0.008 | 0.11 | 0.02 | 0.02 | 0.02 | 0.02 | 0.02 | 0.02 | 0.02 | 0.02 | 0.02 |
| | temperature dissolving in water | - | 2 | 2 | 2 | 2 | 2 | 2 | 2 | 2 | 2 | 2 | 3 | 8 | 14 | 29 |
| | melting point °C | - | 169 | 169 | 169 | 169 | 169 | 169 | 169 | 169 | 169 | 169 | 191 | 196 | 211 | 214 |

Note) *1: #1500, trade name, made by JSR Corporation

*2: Seast 7H, trade name, made by Tokai Carbon Co., Ltd. ($N_2SA$: 126 $m^2/g$)

*3: Seast 9, trade name, made by Tokai Carbon Co., Ltd. ($N_2SA$: 143 $m^2/g$)

*4: Nipsil AQ, trade name, made by Nippon Silica Co., Ltd. ($N_2SA$: 200 $m^2/g$)

*5: bis(3-triethoxysilylpropyl) tetrasulfide

*6: diphenyl guanidine

*7: dibenzothiazyl disulfide

*8: N-t-butyl-2-benzothiazyl sulfenamide

*9: trial product

EP 0 940 435 A1

## Table 6

| Rubber composition No. (part by weight) | | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| SBR *1 | | 20 | 20 | 20 | 20 | 20 | 20 | 20 | 20 | 20 | 20 | 20 | 20 | 20 | 0 | 0 | 20 | 20 | 20 | 20 |
| Natural rubber | | 30 | 30 | 30 | 30 | 30 | 30 | 30 | 30 | 30 | 30 | 30 | 30 | 30 | 30 | 70 | 30 | 30 | 30 | 30 |
| BR *2 | | 50 | 50 | 50 | 50 | 50 | 50 | 50 | 50 | 50 | 50 | 50 | 50 | 50 | 70 | 30 | 50 | 50 | 50 | 50 |
| Carbon black *3 | | 30 | 30 | 30 | 30 | 30 | 30 | 30 | 30 | 30 | 0 | 30 | 30 | 30 | 30 | 40 | 30 | 30 | 30 | 30 |
| Carbon black *4 | | 0 | 0 | 0 | 0 | 0 | 0 | 0 | 0 | 0 | 30 | 0 | 0 | 0 | 0 | 0 | 0 | 0 | 0 | 0 |
| Silica *5 | | 30 | 30 | 30 | 30 | 30 | 30 | 30 | 30 | 30 | 30 | 30 | 30 | 30 | 30 | 40 | 30 | 30 | 30 | 30 |
| Silane coupling agent *6 | | 3 | 3 | 3 | 3 | 3 | 3 | 3 | 3 | 3 | 3 | 3 | 3 | 3 | 3 | 4 | 3 | 3 | 3 | 3 |
| Softening agent | | 10 | 10 | 10 | 10 | 10 | 10 | 10 | 10 | 10 | 10 | 10 | 10 | 10 | 10 | 10 | 10 | 10 | 10 | 10 |
| Stearic acid | | 1 | 1 | 1 | 1 | 1 | 1 | 1 | 1 | 1 | 1 | 1 | 1 | 1 | 1 | 1 | 1 | 1 | 1 | 1 |
| Antioxidant | | 1 | 1 | 1 | 1 | 1 | 1 | 1 | 1 | 1 | 1 | 1 | 1 | 1 | 1 | 1 | 1 | 1 | 1 | 1 |
| Wax | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| ZnO | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| DPG *7 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| DM *8 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| NS *9 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Sulfur | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Foaming agent *10 | | 0 | 0 | 0 | 0 | 0 | 0 | 0 | 0 | 0 | 0 | 5 | 7 | 7 | 0 | 0 | 0 | 0 | 0 | 0 |
| Urea | | 0 | 0 | 0 | 0 | 0 | 0 | 0 | 0 | 0 | 0 | 3 | 4 | 4 | 0 | 0 | 0 | 0 | 0 | 0 |
| PVA short fiber *11 | amount | 0 | 5 | 5 | 5 | 5 | 5 | 5 | 10 | 25 | 5 | 5 | 5 | 5 | 5 | 5 | 5 | 5 | 5 | 5 |
| | sample No. | - | A | A | A | A | A | A | A | A | A | A | A | B | A | A | B | C | D | E |
| | length (mm) | - | 2 | 2 | 2 | 2 | 5 | 15 | 2 | 2 | 2 | 2 | 2 | 2 | 2 | 2 | 2 | 2 | 2 | 2 |
| | diameter (mm) | - | 0.008 | 0.02 | 0.04 | 0.11 | 0.04 | 0.04 | 0.04 | 0.04 | 0.04 | 0.04 | 0.04 | 0.04 | 0.04 | 0.04 | 0.04 | 0.04 | 0.04 | 0.04 |

23

Note) *1: emulsion-polymerized SBR, made by JSR Corporation

*2: BR01, trade name, made by JSR Corporation

*3: Seast 7H, trade name, made by Tokai Carbon Co., Ltd. (N$_2$SA: 126 m$^2$/g)

*4: Seast 9, trade name, made by Tokai Carbon Co., Ltd. (N$_2$SA: 143 m$^2$/g)

*5: Nipsil AQ, trade name, made by Nippon Silica Co., Ltd. (N$_2$SA: 200 m$^2$/g)

*6: bis(3-triethoxysilylpropyl) tetrasulfide

*7: diphenyl guanidine

*8: dibenzothiazyl disulfide

*9: N-t-butyl-2-benzothiazyl sulfenamide

*10: dinitrosopentamethylene tetramine

*11: trial product

Examples 28-40, Comparative Examples 7-8

A radial tire having a tire size of 205/60R16 is manufactured by using the rubber composition shown in Table 5 as a tread base rubber in a tread portion of cap and base structure. With respect to the rubber composition and the tire, the short fiber dispersibility, adhesion ratio between fiber and rubber, E'(30°C), initial steering stability, wet braking distance after running and wet steering stability after running are measured by the aforementioned methods to obtain results as shown in Table 7. The groove height of base rubber is 50% in all tires to be tested.

Table 7

| | Comparative Example 7 | Example 28 | Example 29 | Example 30 | Example 31 | Example 32 | Example 33 | Example 34 | Example 35 | Example 36 | Example 37 | Example 38 | Example 39 | Example 40 | Comparative Example 8 |
|---|---|---|---|---|---|---|---|---|---|---|---|---|---|---|---|
| Rubber composition No. as tread base rubber | 1 | 2 | 3 | 4 | 5 | 6 | 7 | 8 | 9 | 10 | 11 | 12 | 13 | 14 | 15 |
| Short fiber dispersibility | - | ◎ | △ | ○ | ◎ | ◎ | ◎ | ◎ | ◎ | ◎ | ◎ | ◎ | ◎ | ◎ | ◎ |
| Adhesion ratio between fiber and rubber (%) | - | 100 | 97 | 99 | 100 | 100 | 100 | 100 | 99 | 98 | 100 | 96 | 94 | 95 | 95 |
| E' (index) | 100 | 210 | 350 | 300 | 290 | 115 | 220 | 240 | 270 | 290 | 190 | 215 | 220 | 218 | 215 |
| Initial steering stability | 100 | 110 | 105 | 106 | 108 | 102 | 111 | 115 | 116 | 118 | 104 | 108 | 107 | 107 | 106 |
| Wet braking distance after running | 100 | 115 | 110 | 112 | 107 | 104 | 125 | 130 | 121 | 125 | 108 | 114 | 112 | 107 | 102 |
| Wet steering stability after running | 100 | 112 | 102 | 104 | 100 | 101 | 118 | 120 | 114 | 116 | 105 | 110 | 109 | 105 | 96 |

Comparative Example 7 is a control tire using the rubber composition including no water-soluble short fiber as a tread base rubber.

25

When Examples 28-40 are compared with Comparative Example 7, the wet braking performance and the wet steering stability after running are improved even if the length and diameter of the short fiber used, the amount of the short fiber compounded, the kind and amount of the reinforcing filler compounded are variously changed within the ranges defined in the invention, respectively.

Moreover, in case of the rubber composition No. 15 used in Comparative Example 8, the short fibers are observed to remain on the exposed surface of the tread base rubber.

Examples 41-57, Comparative Examples 9-10

A radial tire having a tire size of 185/70R14 is manufactured by using the rubber composition shown in Table 6 as a tread base rubber in a tread portion of cap and base structure. With respect to the rubber composition and the tire, the short fiber dispersibility, adhesion ratio between fiber and rubber, E' (30°C), expansion ratio, initial steering stability, wet braking distance after running, wet steering stability after running and braking distance on ice after running are measured by the aforementioned methods to obtain results as shown in Table 8. The groove height of base rubber is 50% in all tires to be tested.

Table 8-1

| | Comparative Example 9 | Example 41 | Example 42 | Example 43 | Example 44 | Example 45 | Example 46 | Example 47 | Example 48 |
|---|---|---|---|---|---|---|---|---|---|
| Rubber composition No. as tread base rubber | 16 | 17 | 18 | 19 | 20 | 21 | 22 | 23 | 24 |
| Short fiber dispersibility | - | ◎ | ◎ | ◎ | ◎ | ◎ | ○ | ◎ | △ |
| Adhesion ratio between fiber and rubber (%) | - | 100 | 100 | 100 | 100 | 100 | 100 | 100 | 100 |
| E' (index) | 100 | 290 | 220 | 180 | 110 | 210 | 280 | 270 | 390 |
| Expansion ratio (%) | - | - | - | - | - | - | - | - | - |
| Initial steering stability | 100 | 111 | 110 | 108 | 100 | 114 | 111 | 112 | 104 |
| Wet braking distance after running | 100 | 103 | 112 | 114 | 104 | 120 | 108 | 118 | 109 |
| Wet steering stability after running | 100 | 99 | 109 | 112 | 101 | 118 | 104 | 109 | 102 |
| Braking distance on ice after running | 100 | 104 | 114 | 116 | 105 | 125 | 103 | 122 | 102 |

Table 8-2

| | Example 49 | Example 50 | Example 51 | Example 52 | Example 53 | Example 54 | Example 55 | Example 56 | Example 57 | Comparative Example 10 |
|---|---|---|---|---|---|---|---|---|---|---|
| Rubber composition No. as tread base rubber | 25 | 26 | 27 | 28 | 29 | 30 | 31 | 32 | 33 | 34 |
| Short fiber dispersibility | ◎ | ◎ | ◎ | ◎ | ◎ | ◎ | ◎ | ◎ | ◎ | ◎ |
| Adhesion ratio between fiber and rubber (%) | 100 | 100 | 100 | 90 | 100 | 100 | 95 | 96 | 95 | 93 |
| E' (index) | 200 | 100 | 90 | 88 | 170 | 185 | 190 | 185 | 180 | 180 |
| Expansion ratio (%) | - | 20 | 40 | 37 | - | - | - | - | - | - |
| Initial steering stability | 111 | 102 | 100 | 98 | 107 | 109 | 108 | 107 | 106 | 106 |
| Wet braking distance after running | 116 | 112 | 107 | 104 | 111 | 116 | 110 | 108 | 104 | 101 |
| Wet steering stability after running | 113 | 108 | 104 | 102 | 107 | 113 | 108 | 107 | 103 | 95 |
| Braking distance on ice after running | 113 | 135 | 145 | 138 | 119 | 112 | 111 | 108 | 105 | 93 |

Comparative Example 9 is a control tire using the rubber composition including no water-soluble short fiber as a tread base rubber.

When Examples 41-57 are compared with Comparative Example 9, the wet braking performance and the wet

28

steering stability after running are improved even if the length and diameter of the short fiber used, the amount of the short fiber compounded, the kind and amount of the reinforcing filler compounded are variously changed within the ranges defined in the invention, respectively. In Examples 50 and 51, the water-soluble short fibers are melted during vulcanization to form cylindrical bubbles in the matrix rubber. In Example 52 using the rubber composition No. 36, the water-soluble short fibers remain in the matrix rubber in the fibrous shape because they are not melted during the vulcanization.

As mentioned above, according to the invention, the rubber composition containing particular water-soluble resin or short fibers is used as a tread rubber in a pneumatic tire, so that microscopic grooves are effectively formed on the tread surface during the running on wet road surface and also a high tread rigidity can be held by the adhesion between the resin or fiber and rubber and hence there can be provided pneumatic tires having excellent steering stabilities on dry road surface and wet road surface inclusive of ice and snow roads and braking performance on wet road surface at an initial use stage of the tire and excellent wet steering stability and wet braking performance at a worn stage of the tire.

When the rubber composition according to the invention is particularly used as a tread base rubber in the pneumatic tire, the Young's modulus of the base rubber increases and hence the steering stability and wear resistance at an initial use stage are improved. When the tread base rubber is exposed by wearing during the running of the tire, the water-soluble resin or short fibers is peeled off from the exposed surface or dissolved by water existing on the road surface to form voids on the exposed surface, whereby friction coefficient on wet road surface is increased and hence the wet braking performance and wet steering stability are improved.

## Claims

1. A rubber composition for a tire tread comprising a matrix rubber including at least one rubber ingredient selected from natural rubber and synthetic diene rubbers and a water-soluble resin having a temperature dissolving in water of not higher than 20°C.

2. A rubber composition as claimed in claim 1, characterized in that the amount of the water-soluble resin compounded is 1-25 parts by weight based on 100 parts by weight of the rubber ingredient.

3. A rubber composition as claimed in claim 1 or 2, characterized in that the water-soluble resin has a melting point of 120-200°C.

4. A rubber composition as claimed in any of claims 1 to 3, characterized in that the water-soluble resin is a polyvinyl alcohol resin.

5. A rubber composition as claimed in any of claims 1 to 3, characterized in that the water-soluble resin is a water-soluble short resin fiber having a length of 1-10 mm and a diameter of 10-100 $\mu$m.

6. A rubber composition as claimed in claim 5, characterized in that the water-soluble short resin fiber has a melting point of 120-200°C.

7. A rubber composition as claimed in claim 5, characterized in that the water-soluble short resin fiber is made of a polyvinyl alcohol resin.

8. A rubber composition as claimed in claim 7, characterized in that the polyvinyl alcohol resin comprises not less than 95 mol% of vinyl alcohol units and vinyl acetate units provided that the vinyl acetate unit content is within a range of 5-30 mol%.

9. A rubber composition as claimed in claim 7 or 8, characterized in that the polyvinyl alcohol resin contains a thioalcohol unit.

10. A rubber composition as claimed in any of claims 1 to 9, characterized in that the water-soluble resin and the matrix rubber are adhered to each other at not less than 80% of their boundary face at 100% elongation after vulcanization.

11. A rubber composition as claimed in any of claims 1 to 10, characterized by further containing a silane coupling agent in an amount of 0.5-20 parts by weight based on 100 parts by weight of the rubber ingredient.

**12.** A rubber composition as claimed in any of claims 1 to 11, characterized by further containing a reinforcing filler in an amount of 30-120 parts by weight based on 100 parts by weight of the rubber ingredient.

**13.** A rubber composition as claimed in claim 12, characterized in that the reinforcing filler is a carbon black.

**14.** A rubber composition as claimed in claim 12, characterized in that the reinforcing filler is a mixture of carbon black and silica.

**15.** A rubber composition as claimed in claim 14, characterized in that the ratio of silica content to the total amount of the reinforcing filler is not more than 95% by weight and 5-20% by weight of the silica content is a silane coupling agent.

**16.** A rubber composition as claimed in any of claims 13 to 15, characterized in that the carbon black has a nitrogen adsorption specific area ($N_2SA$) of 50-150 $m^2$/g.

**17.** A rubber composition as claimed in claim 14 or 15, characterized in that the silica has a nitrogen adsorption specific area ($N_2SA$) of 130-280 $m^2$/g.

**18.** A rubber composition as claimed in any of claims 1 to 17, characterized by further containing a foaming agent in an amount of 1-30 parts by weight based on 100 parts by weight of the rubber ingredient.

**19.** A pneumatic tire comprising a radial carcass toroidally extending between a pair of bead cores, a belt superimposed about a crown portion of the carcass, and a tread portion superimposed on the belt, characterized in that a rubber composition as claimed in any of claims 1 to 18 is used as a tread rubber constituting the tread portion.

**20.** A pneumatic radial tire as claimed in claim 19, characterized in that the tread portion has a two-layer cap and base structure, and the rubber composition is used as a tread cap rubber.

**21.** A pneumatic tire as claimed in claim 19, characterized in that the tread portion has a two-layer cap and base structure, and the rubber composition is used as a tread base rubber.

**22.** A pneumatic tire as claimed in any of claims 19 to 21, characterized in that water-soluble short fibers included in the rubber composition are oriented in a circumferential direction of the tire.

European Patent
Office

**EUROPEAN SEARCH REPORT**

Application Number

EP 99 30 1615

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | CENTRAL PATENTS INDEX, BASIC ABSTRACTS JOURNAL<br>Week 4397<br>Derwent Publications Ltd., London, GB;<br>AN 466266<br>XP002106999<br>& JP 09 216970 A (BRIDGESTONE)<br>, 19 August 1997<br>* abstract * | 1-8,12, 13,18 | C08L21/00<br>C08J5/04<br>B60C1/00<br>//(C08L21/00,<br>29:04) |
| D,X | CENTRAL PATENTS INDEX, BASIC ABSTRACTS JOURNAL<br>Week 4097<br>Derwent Publications Ltd., London, GB;<br>AN 430725<br>XP002107000<br>& JP 09 193613 A (BRIDGESTONE)<br>, 29 July 1997<br>* abstract * | 1-3,5,6, 19,22 | |
| X | DATABASE WPI<br>Section Ch, Week 9203<br>Derwent Publications Ltd., London, GB;<br>Class A95, AN 92-019218<br>XP002107001<br>& JP 03 266705 A (YOKOHAMA RUBBER CO LTD)<br>, 27 November 1991<br>* abstract * | 1-8 | TECHNICAL FIELDS SEARCHED (Int.Cl.6)<br><br>C08L<br>C08J |
| A | EP 0 771 836 A (BRIDGESTONE CORP)<br>7 May 1997<br>* claim 10; table 5 * | 11-18 | |

The present search report has been drawn up for all claims

| Place of search | Date of completion of the search | Examiner |
|---|---|---|
| THE HAGUE | 23 June 1999 | Van Humbeeck, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 99 30 1615

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-1999

| Patent document cited in search report | Publication date | Patent family member(s) | Publication date |
|---|---|---|---|
| EP 0771836 A | 07-05-1997 | JP 9124851 A | 13-05-1997 |
| | | JP 9255813 A | 30-09-1997 |

EPO FORM P0459

For more details about this annex : see Official Journal of the European Patent Office, No. 12/82